# EUROPEAN PATENT APPLICATION

(11) **EP 1 662 009 A1**
(43) Date of publication of application: **31.05.2006**
(21) Application number: 04257351.9
(22) Date of filing: 26.11.2004
(51) Int. Cl.: C21B 7/20, F27B 1/20, F27D 3/10

(54) **Device for distributing material into a furnace**

(71) Applicant: VAI Industries (UK) Ltd., Stockton-on-Tees TS17 8ER (GB); Voest-Alpine Industrieanlagenbau GmbH & Co, 4031 Linz (AT)
(72) Inventor: Fletcher, Jeremy, Stockton-on-Tees, TS17 ORT (GB); Kibble, Brian, Stockton-on-Tees, TS15 9JQ (GB); Sprenger, Harald, 4240 Freistadt (AT); Wieder, Kurt, 4311 Schwertberg (AT); Wurm, Johann, 4283 Bad Zell (AT)
(74) Representative: VA TECH Patente GmbH & Co

(57) **Abstract**

Charging material needs to be distributed evenly in a furnace 30 or reactor to ensure its best operation. To this end a charging material distribution inside the enclosure of the furnace 30 is used which has a movable spout 4 through which the charging material is fed into the enclosure 30. The distribution device according the present invention is small in size and light in weight and has a moveable spout 4 which is suspended on a gimbal 2 on a fixed chute 3 inside the enclosure 30.

## Description

The present invention relates to a device for distributing material into an enclosure comprising a fixed charging means, a movable charging means, the movable charging means being suspended on gimbals, and at least one actuating means for actuating the gimbal suspension.

For charging material into furnaces or reactors, e.g. like a shaft or metallurgical aggregate reactor, a blast furnace, a melter gasifier or a reduction shaft, or similar devices, it is advantageously or even necessary for the operation of the device to distribute the charging material evenly or according to a certain charging pattern. To this end charging and distribution devices are known from the prior art comprising a movable spout inside the enclosure of the furnace or reactor through which charging material is fed to the furnace or reactor.
From the US 3 972 426 a gimbal suspension of a movable spout is known, having a gear box in which the spout is arranged. The gear box is supported by a first shaft in the casing of the blast furnace. A second shaft is supported by the gear box and is arranged perpendicular to the first shaft. The gear box together with second shaft and spout is tilted around on axis of rotation with the first shaft. To tilt the spout around the second axis of rotation a ring gear is provided in the gear box meshing with a first pinion arranged on a drive shaft and a second pinion arranged on the second shaft. Thus the spout can be tilted in two directions. The first shaft carries the gear box , the second shaft as well as the spout and consequently the shaft and the bearings need to be designed for heavy loads and great torques. Owing to the gear box with the ring gear such a device is bulky and requires quite a lot space within the furnace. Such a device is also heavy which makes it unsuitable for a high speed control of the charging procedure because of the weight and inertia of the charging device. Moreover, the gear box must be cooled in order to withstand the high temperatures within a blast furnace. US 4 042 130 discloses a charging device with a movable spout which is suspended on an universal joint formed by a spherical surface to which the spout is adjustably attached to. The spout has a bearing which internal surface is slightly concave, having a radius of curvature equal to the radius of the spherical surface so that the bearing fits to the periphery of the spherical surface. The spout is actuated by a minimum of three pressure cylinders which are attached to the spout. Such a device requires accurate manufacture and control of the actuating devices because in case the spherical guide is loose, the system is very slack. On the other hand, in case there is hardly any clearance, a very accurate control of the three actuating devices is necessary to avoid unnecessary high friction in the spherical guide. Such a device is therefore sensitive and difficult to manufacture and control.
The US 4 306 827 shows a gimbal suspension of a moveable spout for charging material into a blast furnace. An outer ring is tiltably mounted on the casing of the furnace on two trunnions and carries a tiltably mounted inner ring arranged on a shaft at which inner ring the spout is attached to. The actuating device comprises a multiple jointed drive shaft which is fixed to the shaft of the inner ring. By rotating the drive shaft the outer ring is tilted and by axially displacing the drive shaft the inner ring is tilted. Hence, the spout can be moved to any point within a certain area by tilting the inner and outer ring. The actuating drive can be arranged centred above the spout or side wards. In case it is arranged centred above the spout an off-centre charging to the spout would be necessary which is more complex. If the drive is arranged side wards of the spout a big volume inside the furnace would be required. The drive shaft is for both variants arranged inside the enclosure and is rotatable and moveable in axial direction which makes it necessary to protect the shaft against heat, dust and accretions to ensure functioning of the actuation device.

It is one object of the present invention to overcome the above-described problems of the prior art. A further object of the invention is a device for charging material into an enclosure which is small in size and resistant to high temperatures and dusty atmospheres and which can be integrated into a high speed control of the charging movement.

These objects are solved by using an inner ring of the gimbal suspension that is tiltably arranged on two tilting means which are mounted on the fixed charging means forming a first axis of rotation and an outer ring of the gimbal suspension that is tiltably arranged on further two tilting means which are mounted on the inner ring forming a second axis of rotation; the outer ring being attached to the moveable charging means and the actuating means being attached to the outer or inner ring. Such an arrangement can be designed of light weight and with small dimension which ensures that it can rapidly be moved, hence it may also be employed with a high speed control. Because the inventive device is directly mounted on the fixed charging means it is small in size and requires only little space inside the enclosure.

Preferably two actuating means are provide which makes the control of the movement of the moveable charging means easier. Each of the actuating means advantageously comprises an actuating rod and/or a pressure cylinder, which are angularly displaced and attached to the outer ring or inner ring.

An especially advantageous arrangement shows actuating rods which are angularly displaced from the first and second axis of rotation, which are preferably arranged perpendicularly. This allows an easy control of the moveable spout simply by employing basic mutual dependent mathematical functions which is even easier when the angular displacement of the first actuating rod to the second actuating rod is set to substantially 90° and the angular displacement of the first actuating rod to the first axis is set in range of 0° to ±90°, preferably substantially ±45°.

When the actuating rods are arranged substantially vertically it is possible to arrange them very close to the fixed chute which is a very space saving arrangement.

In case the driving means comprises a pressure cylinder, preferably arranged substantially horizontally, and a movement transformation means for transforming the, preferably horizontal, movement of the pressure cylinder into the vertical movement of the actuating rod it is possible to arrange the drive means outside the enclosure. With a driving means accessible from outside an easy maintenance of the driving means is possible.

With a shielding means for protecting the gimbal suspension and/or the actuating rods against heat and/or dust in the enclosure the resistance against heat and dust inside the enclosure is further increased.

The present invention will be described exemplarily by reference to the accompanying drawings Figs. 1 to 4 wherein like reference numerals refer to like elements, in which
Fig. 1 depicts a 3D view of the inventive device for charging material,
Fig. 2 shows an arrangement of the inventive device in a furnace,
Fig. 3 is a top view of the inventive device and
Fig. 4 is a schematic top view of the inventive device.

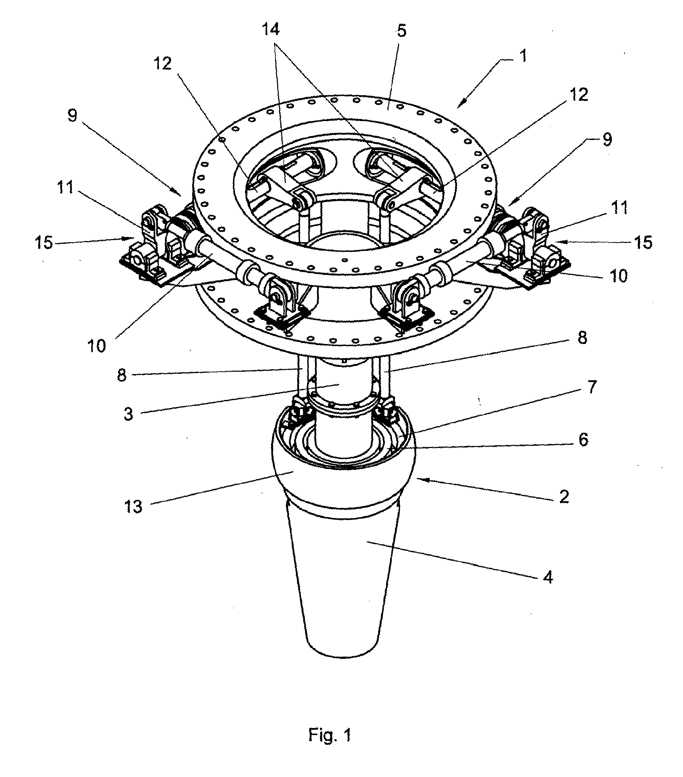

The distribution device 1, as best shown in Fig. 1, comprises a fixed charging means in form of a tubular chute 3, which one end is mounted to a flange 5 for fixing the device into an operating position, e.g. into a blast furnace. At the other end of the fixed chute 3 a gimbal suspension 2 is provided at which a movable charging device in form of a tubular spout 4 is mounted.

The gimbal suspension 2 comprises an inner ring 6 and an outer ring 7. The inner ring 6 is tiltably arranged on its inner side on two bolts or trunnions 21, e.g. on bearings, which are mounted to the fixed chute 3. The two bolts 21 are arranged oppositely thus forming a first axis of rotation 23 around which the inner ring 6 can be tilted with respect to the fixed chute 3. On the outer side of the inner ring 6 two further bolts or trunnions 20 are arranged on which the outer ring 7 is tiltably arranged, e.g. on bearings, thus forming a second axis of rotation 22 around which the outer ring 7 can be tilted with respect to the inner ring 6. The movable spout 4 is mounted to the outer ring 7 and hence is moved together with the outer ring 7. The fixed chute 3, the inner ring 6, the outer ring 7 and the movable chute 4 are arranged substantially concentric. The moveable spout 4 can be moved to any point of a motion area, defined by the maximum allowed tilting range of the inner ring 6 and outer ring 7 and the length of the moveable spout 4, simply by superposition of the tilting motions of the inner and outer ring 6, 7. Hence, charging material which is fed through the fixed chute 3 and moveable spout 4 can be distributed inside the enclosure 30 according to a predefined pattern by controlling the movement of the moveable spout 4.

For actuating the gimbal suspension 2 an actuating means 15 is provided, in the example shown comprising of two actuating rods 8 and two driving means each comprising a movement transformation mean 9 and a pressure cylinder 10. The pressure cylinder 10 is arranged basically horizontally and is articulated with a lever 11 fixed to a shaft 12. A second lever 14 is fixed to the shaft 12 and is rotated together with the shaft. The second lever 14 is articulated with the actuating rod 8 which is articulated with the outer ring 7 and is basically arranged vertically. Therefore, the horizontal movement of the pressure cylinder 10 is transformed into a substantially vertical movement of the actuating rod 8 by the movement transformation means 9, comprising of the levers 11, 14 and a shaft 12. But it is obvious that the actuating means or movement transformation means could also be arranged differently or could comprise additional or other components as described above. It is further possible that the pressure cylinders 10 act directly on the inner or outer ring 6, 7, without movement transformation means 9 and rods 8.

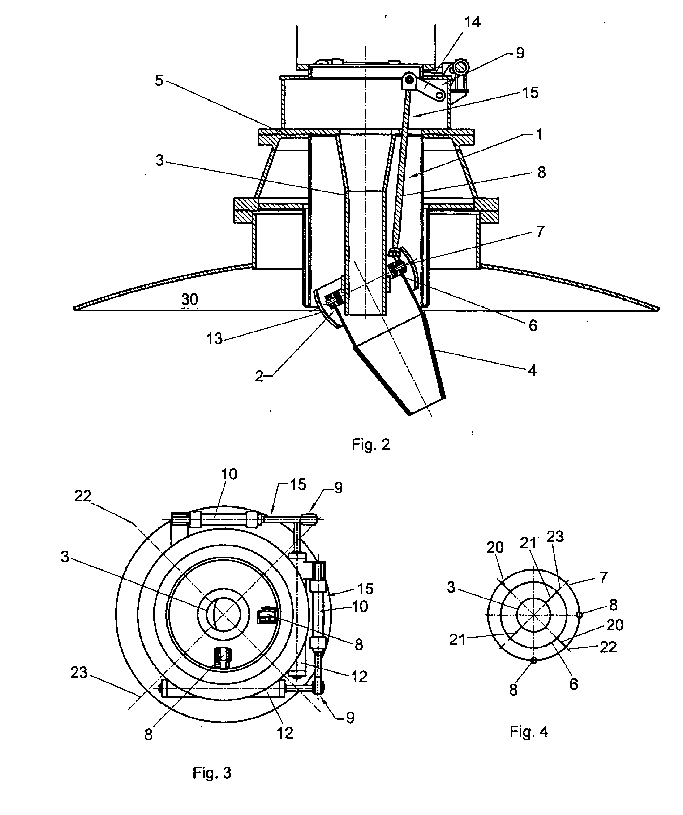

The first axis 23 and second axis 22 are advantageously arranged perpendicular, as best seen from Fig. 4. The actuating rods 8 are attached to the outer ring 7 angularly displaced from the axes 22, 23 whereat the angular displacement of the actuating rods 8 is preferably 90° and the angular displacement of the actuating rods 8 to the axes 22, 23 is preferably ±45° or 0°, but may be in the range of 0° to ±90°. With such an arrangement the movement of the inner ring 6 and outer ring 7 and therefore also of the movable spout 4 can easily be described by basic mutual dependent mathematical functions. This allows for an easy integration into a charging material distribution control system and the position of the outer ring 7 (and consequently also of the tubular spout 4) can easily be controlled in a high speed closed loop control system to achieve a smooth movement of the movable spout 4.

Furthermore, a shielding means 13 is provided around the inner and outer ring 6, 7 in order to protect the gimbal suspension 2 against heat and dust in the enclosure 30. The shielding means 13 can be a ring surrounding the gimbal suspension 2 or part thereof. The shielding means 13 can also be used to protect the actuating rods 8 or parts thereof.

The actuating drive, comprising the pressure cylinder 10 and the movement transformation means 9, is separated from the gimbal suspension 2 and can be arranged outside the enclosure. This allows that single parts of the distribution device 1 can be replaced or maintained without the need of replacing or dismantling the complete distribution device 1.

Figs. 2 and 3 show the charging material distribution device in its operation position on top of a furnace 30 (or reactor or similar) with top charging. Charging material, e.g. coal, is fed through a feeding conduct (not shown), e.g. a coal screw conveyor, and falls down into the fixed chute 3 and further into the moveable spout 4. By moving the movable spout 4 with the actuating means according a certain pattern the charging material can be distributed in the furnace 30.

## Claims

1. Device for distributing material in an enclosure comprising a fixed charging means (3), a movable charging means (4), the movable charging means (4) being suspended on gimbals, and at least one actuating means (15) for actuating the gimbal suspension (2), **characterized in that** an inner ring (6) of the gimbal suspension (2) is tiltably arranged on two tilting means (21) which are mounted on the fixed charging means (3) forming a first axis (23) of rotation, an outer ring (7) of the gimbal suspension (2) is tiltably arranged on further two tilting means (20) which are mounted on the inner ring (6) forming a second axis (22) of rotation, the outer ring (7) being attached to the moveable charging means (4) and the actuating means (15) being attached to the outer ring (7) or inner ring (6).

2. Device according to claim 1, **characterised in that** two actuating means (15) are provided, each of which comprises an actuating rod (8) and/or a pressure cylinder (10), the two actuating rods (8) or the two pressure cylinders (10) being angularly displaced and attached to the outer ring (7) or inner ring (6).

3. Device according to claim 2, **characterized in that** the actuating rods (8) being angularly displaced from the first and second axis (22, 23) of rotation.

4. Device according to one of claims 1 to 3, **characterized in that** the first and second axis of rotation (22, 23) being arranged perpendicularly.

5. Device according to one of claims 2 to 5, **characterized in that** the angular displacement of the first actuating rod (8) to the second actuating rod (8) is substantially 90°.

6. Device according to claim 5, **characterized in that** the angular displacement of the first actuating rod (8) to the first axis (23) is in the range of 0° to ±90°, preferably substantially ±45°.

7. Device according to one of claims 2 to 6, **characterized in that** the actuating rods (8) are arranged substantially vertically.

8. Device according to one of claims 2 to 7, **characterized in that** a driving means is provided for each of the actuating rods (8) for moving the actuating rods (8) substantially vertically.

9. Device according to claim 8, **characterised in that** the driving means comprises a pressure cylinder (10), preferably arranged substantially horizontally, and a movement transformation means (9) for transforming the, preferably horizontal, movement of the pressure cylinder (10) into the substantially vertical movement of the actuating rod (8).

10. Device according to one of claims 1 to 9, **characterized in that** the moveable charging means (4) comprises a tubular spout.

11. Device according to one of claims 1 to 10, **characterised in that** a shielding means (13) is provided for protecting the gimbal suspension (2) and/or the actuating rods (8) against heat and/or dust in the enclosure (30).

12. Device according to one of claims 1 to 11, **characterised in that** a control system, preferably a high speed closed loop control system, is provided for controlling the movement of the moveable charging means (4) .

13. Use of the device according to claims 1 to 12 for distributing charging material in a reactor, like a shaft or metallurgical aggregate reactor, or in a furnace, e.g. a blast furnace, or in a melter gasifier or in a reduction shaft.
